(19) Europäisches Patentamt
European Patent Office
Office européen des brevets

(11) **EP 2 761 879 B1**

(12) **EUROPEAN PATENT SPECIFICATION**

(45) Date of publication and mention
of the grant of the patent:
**19.08.2015 Bulletin 2015/34**

(51) Int Cl.:
***H04N 17/00*** *(2006.01)*          ***H04L 29/06*** *(2006.01)*
***H04N 21/647*** *(2011.01)*

(21) Application number: **11796641.6**

(22) Date of filing: **24.11.2011**

(86) International application number:
**PCT/EP2011/070897**

(87) International publication number:
**WO 2013/044997 (04.04.2013 Gazette 2013/14)**

(54) **A METHOD TO MEASURE QUALITY OF EXPERIENCE OF A VIDEO SERVICE**

VERFAHREN ZUR MESSUNG DER ERFAHRUNGSQUALITÄT EINES VIDEODIENSTES

PROCÉDÉ POUR MESURER LA QUALITÉ D'EXPÉRIENCE D'UN SERVICE DE VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2011 US 201161540281 P**

(43) Date of publication of application:
**06.08.2014 Bulletin 2014/32**

(73) Proprietor: **Telefonica S.A.
28013 Madrid (ES)**

(72) Inventors:
• **GARCIA DE BLAS, Gerardo;**
E-28035 Madrid (ES)
• **MAESO MARTIN-CARNERERO, Adrian**
E-28010 Madrid (ES)
• **MONTES MORENO, Pablo**
E-28043 Madrid (ES)
• **RAMON SALGUERO, Francisco Javier**
E-28028 Madrid (ES)

(74) Representative: **Carlos Hernando, Borja
Garrigues IP, S.L.P.
Hermosilla, 3
28001 Madrid (ES)**

(56) References cited:
**US-A1- 2008 298 448      US-B1- 6 988 144**

• **ERMAN B ET AL: "Analysis and realization of
IPTV service quality", BELL LABS TECHNICAL
JOURNAL, WILEY, CA, US, vol. 12, no. 4, 21
December 2007 (2007-12-21), pages 195-212,
XP001510905, ISSN: 1089-7089, DOI:
10.1002/BLTJ.20276**
• **SERRAL-GRACIÃ R ET AL: "An Overview of
Quality of Experience Measurement Challenges
for Video Applications in IP Networks", 1 June
2010 (2010-06-01), WIRED/WIRELESS INTERNET
COMMUNICATIONS, SPRINGER BERLIN
HEIDELBERG, BERLIN, HEIDELBERG, PAGE(S)
252 - 263, XP019142969, ISBN: 978-3-642-13314-5
section 1, section 2 (see part on jitter), section 4.2
(see part on blocking), table 1**
• **WELCH INEOQUEST TECHNOLOGIES J CLARK
CISCO SYSTEMS J: "A Proposed Media Delivery
Index; draft-welch-mdi-02.txt", 20050601, no. 2, 1
June 2005 (2005-06-01), XP015039998, ISSN:
0000-0004**

## Description

Field of the art

The present invention generally relates to a method to measure quality of experience of a video service, said video service being over-the-top video streaming provided to a user application under request by means of a network, and more particularly to a method that comprises calculating a Key Performance Indicator, or KPI, from measurable network parameters of said network for each video provided by said video service, assigning a Key Quality Indicator, or KQI, to each KPI by means of analytical models and calculating a global KQI function of a set of KQIs.

Prior State of the Art

Typically, the way of measuring the Quality of Experience of the video services has been through the performance of subjective tests or difference analysis between the source and the received streams. The insights of some of the methods that are used are described next.

- MOS (Mean Opinion Score)

The Mean Opinion Score (MOS) test has been used for decades in telephony networks to obtain the user's QoE of this voice service. Modern telecommunication networks provide a wide array of services using many transmission systems. In particular, the rapid deployment of digital technologies has led to an increased need for evaluating the transmission characteristics of new transmission equipment. In many circumstances, it is necessary to determine the subjective effects of some new transmission equipment or modification to the transmission characteristics of a telephone network.

In multimedia (audio, voice telephony, or video) especially when codecs are used to compress the bandwidth requirement (for example, of a digitized voice connection from the standard 64 kilobit/second PCM modulation), the mean opinion score (MOS) provides a numerical indication of the perceived quality from the users' perspective of received media after compression and/or transmission.

MOS tests are specified by ITU-T recommendation P.800 [1]. This Recommendation describes methods for obtaining subjective evaluations of transmission systems and components.

The MOS provides a numerical indication of the perceived quality from the users' perspective of received media after compression and/or transmission. It is expressed as a single number in the range 1 to 5, where 1 is lowest perceived quality, and 5 is the highest perceived.

- PEVQ (Perceptual Evaluation of Video Quality)

PEVQ (Perceptual Evaluation of Video Quality) is a standardized E2E measurement algorithm to score the picture quality of a video presentation by means of a 5-point mean opinion score (MOS). The measurement algorithm can be applied to analyse visible artefacts caused by a digital video encoding/decoding (or transcoding) process, RF- or IP-based transmission networks and end-user devices. Application scenarios address next generation networking and mobile services and include IPTV (Standard-definition television and HDTV), streaming video, Mobile TV, video telephony, video conferencing and video messaging.

PEVQ is based on modelling the behaviour of the human visual tract and besides an overall quality MOS score (as a figure of merit) abnormalities in the video signal are quantified by a variety of KPIs, including PSNR, distortion indicators and lip-sync delay.

PEVQ is a full-reference algorithm and analyses the picture pixel-by-pixel after a temporal alignment (also referred to as 'temporal registration') of corresponding frames of reference and test signal. PEVQ MOS results range from 1 (bad) to 5 (excellent).

- DiversifEye (Shenick Network Systems)

DiversifEye's is a measurement system that makes a per flow analysis enabling QoE performance testing on each and every flow. Their analysis is based on a 'per flow' basis as they claim that it is the only mechanism to guarantee performance at the user's granularity. Its architecture is used to emulate and assess subscriber Quality of Experience, network and device performance limitations, along with application performance under varying loads and conditions. The key strength to 'Per flow' testing is the microscopic view gained on live tests. This is representative of the in-depth performance analysis of each and every individual end point's quality of experience, on a per application basis.

A core benefit of per flow analysis is the ability to view the impact that various traffic flows and network devices (settings and conditions) have on a variety of traffic types. In diversifEye the Per flow assessment is enabled on all application flows including Secure VPNs, LTE - GTP tunnels, OTT - adaptive streams, IP-TV, VoD, VoIP, Telepresence, Data (web, email, P2P), etc. Per flow provides the necessary performance details on all delay sensitive applications and is critical in defining traffic management settings, along with guaranteeing a high subscriber Quality of Experience (QoE).

Additional benefits of diversifEye's per flow architecture is the ability to actively monitor live test runs. Users of diversifEye can add performance monitoring algorithms to each and every emulated application flow. During live test runs the algorithm actively monitors the performance on the associated flow, when the flow's performance crosses the assigned threshold level an event notification is generated.

Its purpose is to run tests rather than real network measurements as it is used to emulate both client and server side applications. The result is a set of real time performance statistics for each and every individual application flow request or activity.

Problems with existing solutions

The current solutions for video QoE measurement have several drawbacks:

- Difference analysis: The measurement paradigm is to assess degradations of a decoded video sequence output from the network in comparison to the original reference picture. With this kind of analysis, at least two measuring points are required.
- In MOS methodology, a single test condition (the video sequence) is presented to the viewers once only. They should then give the quality according to the predefined scale. This methodology obviously lacks of precision and objectivity.
- Finally, subjective video quality tests are quite expensive in terms of time (preparation and running) and human resources.

Description of the Invention

It is necessary to offer an alternative to the state of the art which covers the gaps found therein, particularly related to the lack of proposals which really provide techniques to obtain quality of experience measurements in video services in an efficient and objective way.

To that end, the present invention provides a method to measure quality of experience of a video service, said video service being over-the-top video streaming provided to a user application under request by means of a network.

Contrary to the known proposals, the method of the invention, in a characteristic manner, comprises calculating a Key Performance Indicator, or KPI, from measurable network parameters of said network for each video provided by said video service, assigning a Key Quality Indicator, or KQI, to each KPI by means of analytical models and calculating a global KQI function of a set of KQIs according to the characterizing features of the method in claim 1.

Other embodiments of the method of the invention are described according to appended claims 2 to 7 , and in a subsequent section related to the detailed description of several embodiments.

Brief Description of the Drawings

The previous and other advantages and features will be more fully understood from the following detailed description of embodiments, with reference to the attached drawings which must be considered in an illustrative and non-limiting manner, in which:

Figure 1 shows the KQIs obtainment cycle from measurable network parameters, according to an embodiment of the present invention.

Figure 2 shows a graphic with the volume of bytes received by a user in a scenario without interruptions, according to an embodiment of the present invention.

Figure 3 shows a graphic with the volume of bytes received by a user in a scenario with one interruption, according to an embodiment of the present invention.

Figure 4 shows the function for calculating video streaming KQI from KPI, according to an embodiment of the present invention.

Figure 5 shows the KQI cumulative distribution function, according to an embodiment of the present invention.

Figure 6 shows graphically the obtained KPIs (or interruption rates) for an implementation of the present invention.

Figure 7 shows graphically the KQI cumulative distribution function for said implementation of the present invention.

Detailed Description of Several Embodiments

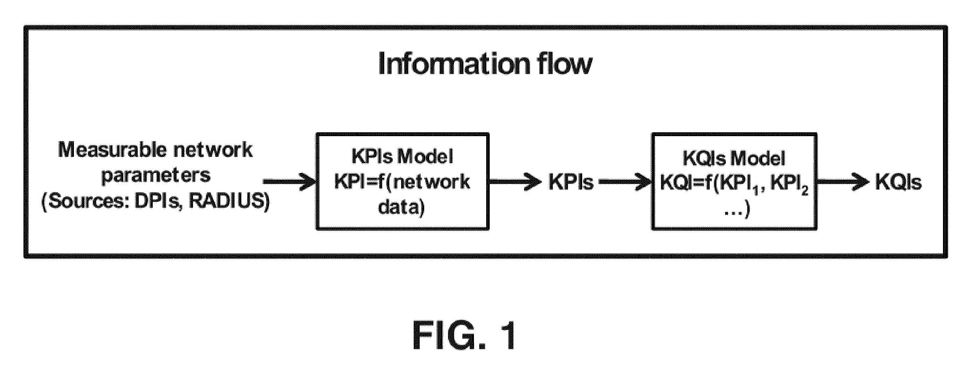

The basic concept of the invention relies in the use of a method that collects network measurements in just one point and for a very particular application (OTT Video Streaming). From these measurements, the method follows an analytical model in order to calculate some Key Performance Indicators (KPIs) required to obtain the user's QoE. As a function of these KPIs, the QoE is expressed in terms of Key Quality Indicators (KQIs) following another analytical model. The information flow of the method was depicted in Figure 1.

The OTT Video streaming traffic is generated by the platforms that host videos and stream them to the users after their request. These videos are delivered to the user via HTTP/TCP connections following the client-server model. Among the most popular portals that generate this type of traffic are YouTube, Metacafe and Megavideo.

By its nature, this type of traffic is elastic, although specific characteristics from inelastic applications are necessary. It is required that the connection has enough throughput to allow the application to play the content in a smooth and seamless manner from the beginning so that the user perceives that the application works properly and the application does not require a great queuing capacity. To achieve this behaviour, it should be required that the application input (data throughput) is at least equal to that required for viewing (the bitrate of the video). Additionally, it is required that the waiting time for reproduction start is low, although this parameter is less relevant for the purposes of perceived quality.

Therefore, the qualitative parameters of quality for the video streaming are the smooth playback (without interruption) and a low initial waiting time.

Instead of using a global KPI, specific KPIs have been used for each video playback. Precisely, the KPI that has been chosen to reflect the smooth video playback is the interruption rate (number of interruptions or breaks during the video playback time). An interruption occurs when the instantaneous throughput received is exceeded by the bitrate of the video.

Next, the process of determining when the interruptions occur and the calculation of the particular KPI of each video are detailed. After that, it is described how to calculate the associated particular KQI and a possible method to calculate a global KQI.

• KPIs obtainment model from network parameters

The model focuses on how to identify an interruption in the user's application. To do this, it is required to know how the user's application works (for instance, an embedded Flash player in a web page) and which are the conditions that must appear before an interruption occurs.

There is an initial buffering time ($T_0$) before the start of the video playback that allows the application to protect against possible variations in the received throughput. This initial time $T_0$ may vary among the different streaming sites, but it generally corresponds to the time required to acquire a volume of bytes $B_0$ that allows the view of a concrete video playback time $\tau_0$, different for each streaming site. The time $\tau_0$ is independent of the video bitrate, but it determines the initial volume of bytes to be acquired $B_0$. Specifically, the initial volume of bytes $B_0$ is given by the following equation:

$$B_0 = r \cdot \tau_0$$

where:

- r is the video bitrate
- $\tau_0$ is the initial video playback time (specific video player parameter)

After this time, the video player starts the playback and must receive enough bytes (enough throughput) to remain above the video encoding bitrate, so that there are no interruptions. Specifically, the condition of not interrupted playback is given by the following equation:

$$B(t) \geq r \cdot (t - T_0)$$

where:

- B(t) is the temporal evolution of the received bytes
- r is the video bitrate
- $T_0$ is the initial buffering time (time to acquire $B_0$ bytes)

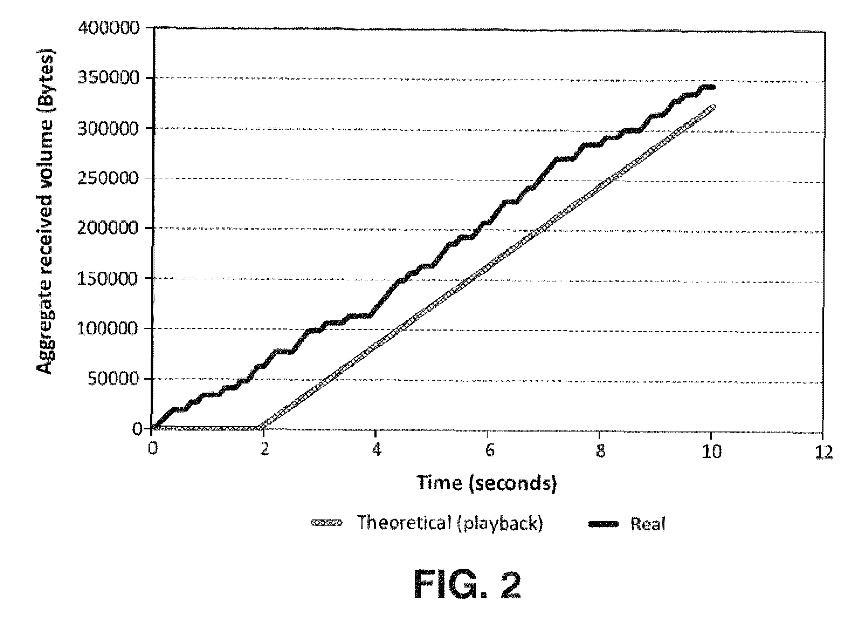

Figure 2 showed an example of the evolution of the volume of bytes received by a user B(t) in a scenario with a non-interrupted playback.

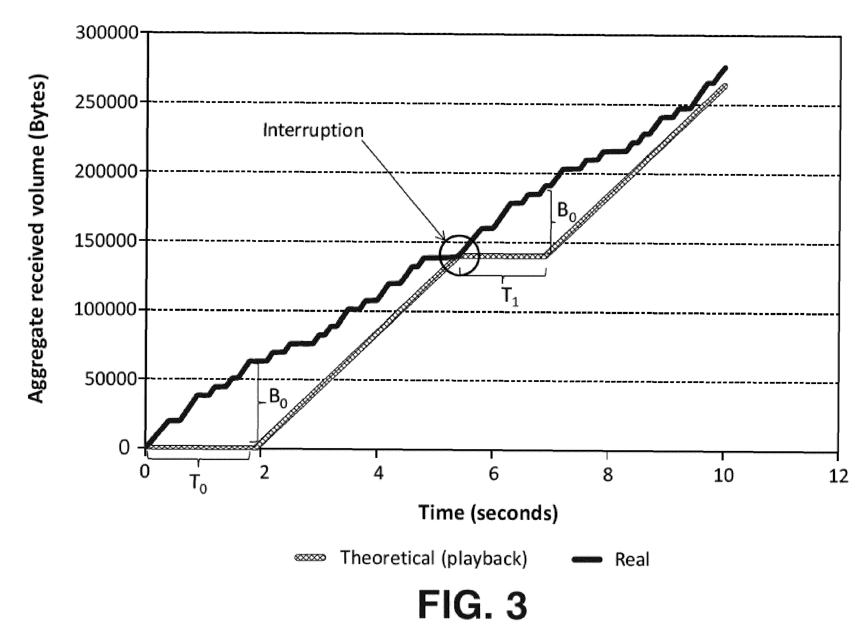

If the volume of bytes received at any given time is below the theoretical line of video playback, there will be an interruption. Figure 3 showed a scenario with one interruption.

At time $T_i$ in which the interruption occurs, the condition of the equation is not accomplished, i.e., the particular condition of the scenario is the following:

$$B(T_i) < r \cdot (T_i - T_0)$$

After the first interruption, it will take a time $T_1$ until it buffers again a volume of $B_0$ bytes in order to allow the playback of a video time $\tau_0$. After this time, the non-interruption condition changes and it becomes as follows:

$$B(t) \geq r \cdot (t - T_0 - T_1)$$

where $T_1$ is the duration of the first interruption, which equals the time needed to buffer $B_0$ bytes again.

Generally, after n interruptions:

$$B(t) \geq r \cdot \left( t - T_0 - \sum_{i=1}^{n} T_i \right)$$

where $T_i$ is the duration of the i-th interruption, equivalent to the time needed to buffer $B_0$ bytes after the interruption occurs.

Following the previous steps, it is possible to determine when there has been an interruption. Obviously, it is necessary to know the average video bitrate. Although knowing this rate may seem complicated, an evolved DPI could do it because the information travels inside the data packets. In fact, it is possible to obtain the codification bitrate of the videos from popular streaming sites such as YouTube and Megavideo (totalling more than 50% of video streaming traffic).

For each displayed video, it is possible to calculate the particular KPI (interruptions rate during the display time) using the following equation:

$$KPI_j = \frac{N_{int,j}}{d} = \frac{N_{int,j}}{T_{end} - T_{start}}$$

where:

- $T_{start}$ is the instant of the video request.
- $T_{end}$ is the instant of the reception of the last video data packet.
- $N_{int,j}$ is the number of interruptions of video j-th during the playback time (from Tstart to $T_{end}$)
- d is the duration of the video playback

During a sufficiently large period of time, the particular KPI of each video playback will be obtained and these KPIs will be used to calculate the individual KQIs and, ultimately, the global KQI.

• KQIs obtainment model from network parameters

The particular KQI must capture the impact of its associated KPI. Prior to the establishment of a mathematical function that relates KQIs and KPIs, the scale of KQIs must be always defined and decide whether the variation between the extremes of the scale must be linear, concave or convex.

In this case, the scale of KQI ranges from 1 to 5, where score 1 is the worst quality (dreadful) and the value 5 corresponds to the highest quality (ideal). A video is considered ideal if the number of interruptions detected during playback is zero. Meanwhile, if the number of interruptions is equal to or greater than 4 interruptions per minute, the quality is considered dreadful.

Regarding the concavity, the chosen function must be concave upward, so that the KQI responds more sharply to low values of the KPI. For interruption rates greater than 2 interruptions per minute, the degradation of the quality is lower as the quality is low by itself.

With these features, the function chosen to calculate the KQI is the following:

$$KQI_j = \begin{cases} 1 + (4 - KPI_j)^4, & if\ KPI_j \leq 4 \\ 1, & if\ KPI_j > 4 \end{cases}$$

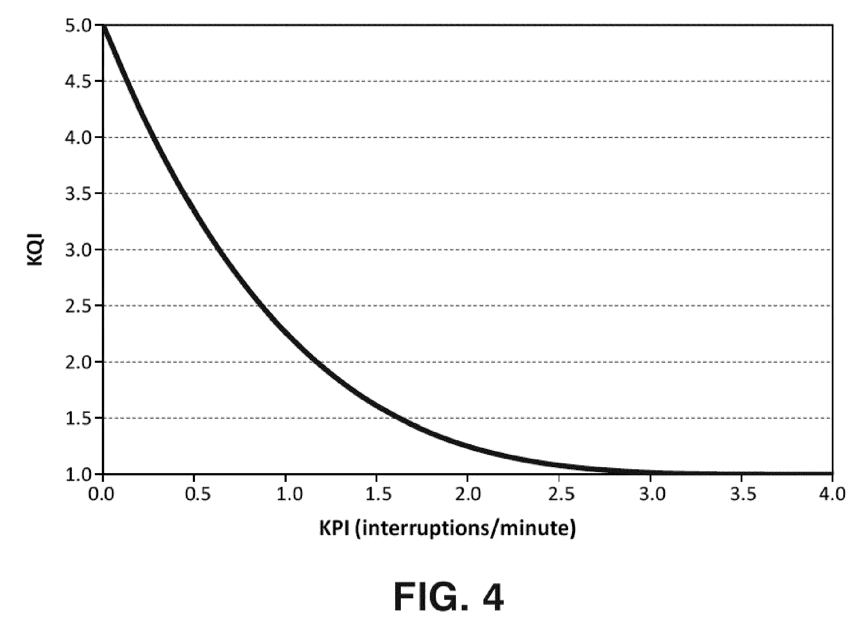

Figure 4 illustrated the correspondence between the KPI and the particular KQI for each video viewed.

After obtaining the particular KQIs of all the videos during a significant period, a global KQI representing the overall quality of the video streaming service could be obtained. There are several options for calculating this global KQI:

- The average of the particular KQIs.
- The median or the 50th percentile of the particular KQIs distribution function.
- The x-th percentile of the of the particular KQIs cumulative distribution function, i.e. the value of KQI for which x% of the videos have a quality lower than that KQI.

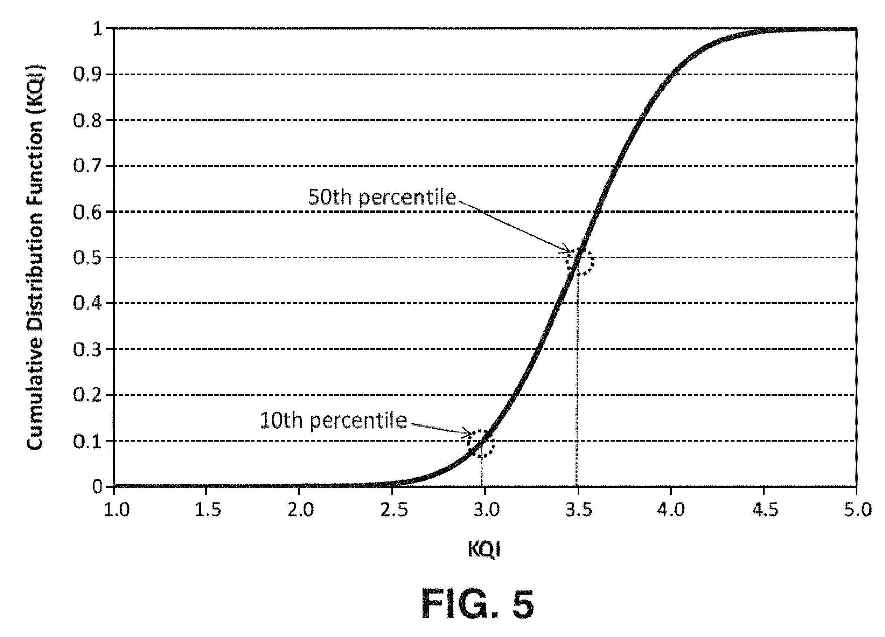

To calculate the global KQI, the videos whose playback time d is less than a certain threshold (few seconds) should be discarded as not being reliable enough.
As an example, Figure 5 showed a possible function for the distribution of particular KQIs, emphasizing the 50th percentile (median) and 10th percentile.

• Implementation of the invention

The invention has been deployed in a general purpose hardware as a prototype to evaluate the perceived QoE of the users from the YouTube video streaming service. This method performs the functions described before to obtain the KQI from some measurable network parameters.

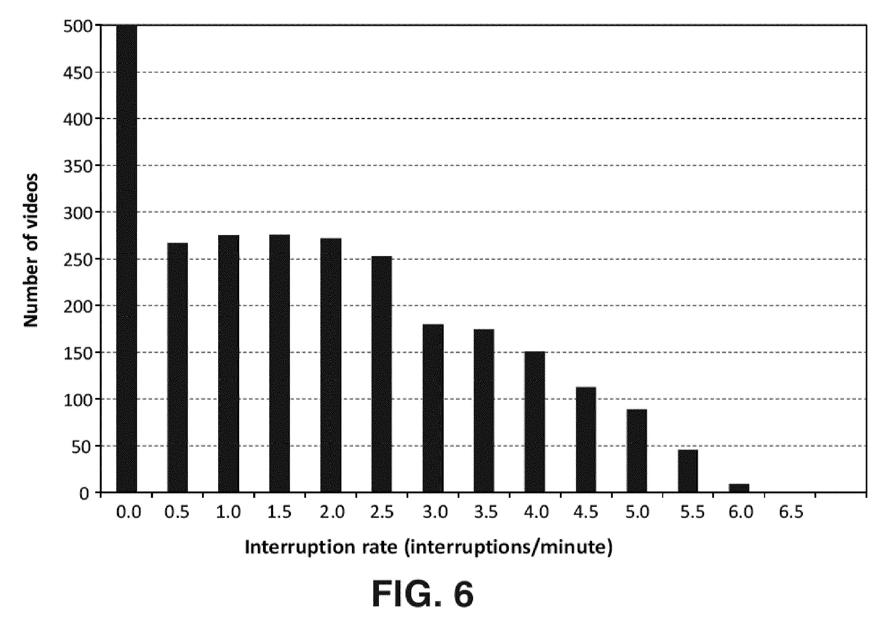

In the analysis performance, real network measurements from an evolved DPI have been used. In Figure 6 some results of the analysis could be found.

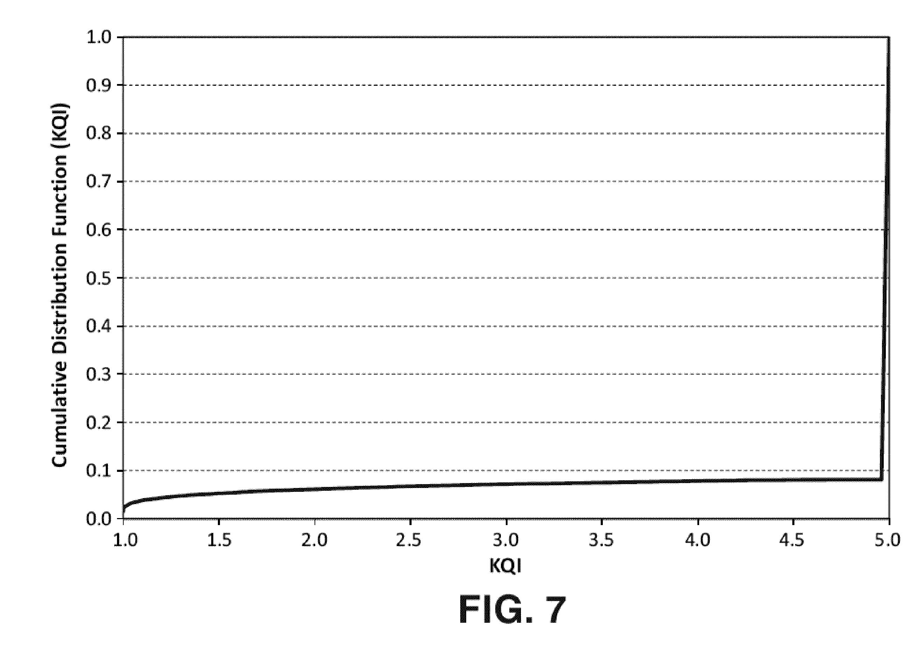

In this study, around 30,000 video playbacks were analysed, obtaining their particular KPI. More than 92% of the video playbacks had zero interruptions. As a function of these KPIs, the method is able to obtain the particular KQIs of each video playback. In Figure 7 the KQI cumulative distribution function was depicted.

As it has been previously explained, there are many possibilities of obtaining a global KQI. From Figure 7 of the performed analysis, it is possible to obtain the following possible values of this global KQI parameter:

- Average of particular KQIs: 4,69
- 50th percentile: 5,00
- 10th percentile: 5,00
- 5th percentile: 1,001

In this particular case, it seems reasonable to choose the average of the particular KQIs as the way of obtaining the global KQI as its value is the most representative of the QoE perceived by the users of the service.

• Advantages of the invention

The present invention has the following advantages:

- With this method, only one point of measurement is required in the network. Unlike the systems based on difference analysis, this Video QoE measurement method just needs to measure the parameters in one point of the network (for instance, one link) and with the information gathered from those measurements, it is able to evaluate the QoE perceived by the users of a particular service.

- Due to the automation of the QoE evaluation, the results of the analysis are fully objective. Through the application of the models of the invention, the method is able to evaluate the user's perspective (subjective by definition) automatically and continuously without requiring human opinion or presence.

- The Video QoE measurement method saves the time and human resources costs that are intrinsic in the subjective video quality tests.

A person skilled in the art could introduce changes and modifications in the embodiments described without departing from the scope of the invention as it is defined in the attached claims.

ACRONYMS

CDF     Cumulative Distribution Function
DPI     Deep Packet Inspection
KPI     Key Performance Indicator
KQI     Key Quality Indicator
MOS     Mean Opinion Score
OTT     Over-The-Top
PEVQ    Perceptual Evaluation of Video Quality
QoE     Quality of Experience

REFERENCES

[1] ITU-T Recommendation P.800: Methods for subjective determination of transmission quality: http://www.itu.int/rec/T-REC-P.800-199608-I/en

**Claims**

1.  A method to measure quality of experience of a video service, said video service being over-the-top video streaming provided to a user application under request by means of a network, wherein the method comprises:

    - calculating a Key Performance Indicator, or KPI, from measurable network parameters of said network for each video provided by said video service, assigning a Key Quality Indicator, or KQI, to each KPI by means of analytical models and calculating a global KQI function of a set of KQIs, wherein said KPI is an interruption rate, said interruption rate indicating number of interruptions or breaks during a video playback time;

    **characterised in that** it further comprises:

    - considering that a first interruption has occurred after the start of a playback of a video in said user application if the following condition is given:

$$B(t) < r \cdot (t - T_0)$$

where

   $B(t)$ is the time-depending evolution of received bytes of said video in said user application;
   $t$ is the time variable;
   $r$ is the video bitrate;
   $T_0$ is the initial buffering time needed to acquire an initial volume of bytes $B_0$, wherein $B_0 = r \cdot \tau_0$, and wherein $\tau_0$ is an initial playback time specific to each video player;

- considering an interruption during said playback of said video after n interruptions occurred if the following condition is given:

$$B(t) < r \cdot (t - T_0 - \sum_{i=1} T_i)$$

wherein

   $n$ is the number of interruptions that previously occured during playback of said video up to time t; and
   $T_i$ is the duration of each interruption, said duration being the time needed to buffer $B_0$ bytes; and

- calculating said interruption rate for said video according to the following formula:

$$KPI = \frac{N_{int}}{d}$$

where

   KPI is the Key Performance Indicator referred to said interruption rate;
   $N_{int}$ is the total number of interruptions that occurred during said playback of said video; and
   $d$ is the duration of the playback of said video, wherein $d = T_{end} - T_{start}$, $T_{end}$ being the instant of reception of the last video data packet and $T_{start}$ being the instant of the video request.

2.  A method as per claim 1, comprising obtaining said video bitrate by means of Data Packet Inspection techniques.

**3.** A method as per any of previous claims, wherein:

- values of KQIs are comprised in a scale by which the lowest value of said scale indicates the worst quality of experience and the highest value of said scale indicates the highest quality of experience, said highest quality of experience achieved if the number of interruptions during the playback of a video is zero and said worst quality of experience achieved if said number of interruptions is equal or greater than a threshold; and

- the variation between extremes of said scale is linear, concave or convex.

**4.** A method as per claim 3, comprising performing said assignment of a KQI to a KPI by means of a concave function according to the following formula:

$$KQI = \begin{cases} 1 + (4 - KPI)^4, & if\ KPI\ \leq 4 \\ 1, & if\ KPI\ > 4 \end{cases}$$

wherein said lowest value of said scale is 1, said highest value of said scale is 5 and said threshold is 4.

**5.** A method as per any of previous claims, comprising determining a global KQI function of said set of KQIs, each KQI of said set of KQIs corresponding to each video provided to said user application, by calculating:

- the average of said set of KQIs;
- the median of the distribution function of said set of KQIs; or
- a percentile of the cumulative distribution function of said set of KQIs.

**6.** A method as per claim 5, comprising discarding KQIs for said global KQI calculation if the playback time of videos related to said KQIs is below a certain threshold.

**7.** A method as per any of previous claims, wherein said global KQI is the measure of said quality of experience of a video service.

**Patentansprüche**

**1.** Verfahren zur Messung der Erfahrungsqualität eines Videodienstes, wobei der Videodienst *Over-the-top Video Streaming* ist, bereitgestellt für eine Benutzeranwendung auf Anforderung mittels eines Netzwerks, wobei das Verfahren umfasst:

- Berechnung eines *Key Performance Indicator,*

oder KPI, von messbaren Netzwerkparametern des Netzwerks für jedes Video, bereitgestellt durch den Videodienst, Zuordnung eines *Key Quality Indicator*, oder KQI, zu jedem KPI mittels analytischer Modelle und Berechnung einer globalen KQI Funktion einer Reihe von KQIs, wobei der KPI eine Unterbrechungsrate ist, wobei die Unterbrechungsrate die Anzahl von Unterbrechungen oder Pausen während einer Videowiedergabezeit anzeigt;

**dadurch gekennzeichnet, dass** es ferner umfasst:

- Berücksichtigung, dass eine erste Unterbrechung nach dem Beginn einer Wiedergabe eines Videos in der Benutzeranwendung aufgetreten ist, wenn die folgende Bedingung gegeben ist:

$$B(t) < r \cdot (t - T_0)$$

wo

$B(t)$ die zeitabhängige Entwicklung der empfangenen Bytes des Videos in der Benutzeranwendung ist;
$t$ die Zeitvariable ist;
$r$ die Video-Bitrate ist;
$T_0$ die Anfangspufferzeit ist, die benötigt wird, um ein anfängliches Volumen von Bytes $B_0$ zu erwerben, wobei $B_0 = r \cdot \tau_0$, und wobei $\tau_0$ eine anfängliche Wiedergabezeit, spezifisch für jeden Videospieler ist;

- Berücksichtigung einer Unterbrechung während der Wiedergabe des Videos, die nach $n$ Unterbrechungen aufgetreten ist, wenn die folgende Bedingung gegeben ist:

$$B(t) < r \cdot (t - T_0 - \textstyle\sum_{i=1} T_i)$$

wobei

$n$ die Anzahl der Unterbrechungen, die zuvor während der Wiedergabe des Videos bis zur Zeit t auftraten, ist; und
$T_i$ die Dauer jeder Unterbrechung ist, wobei die Dauer die Zeit ist, die benötigt wird, um $B_0$ Bytes zu puffern; und

- Berechnung der Unterbrechungsrate für das Video gemäß der folgenden Formel:

$$KPI = \frac{N_{int}}{d}$$

wo

KPI der *Key Performance Indicator*, der die Unterbrechungsrate bezeichnet, ist;
$N_{int}$ die gesamte Anzahl an Unterbrechungen, die während der Wiedergabe des Videos auftraten, ist;
und
$d$ die Dauer der Wiedergabe des Videos ist, wobei $d = T_{Ende} - T_{Beginn}$, wobei $T_{Ende}$ der Zeitpunkt des Empfangs des letzten Videodatenpakets ist, und $T_{Beginn}$ der Zeitpunkt der Videoanforderung ist.

2. Verfahren nach Anspruch 1, das Erhalten der Video-Bitrate mittels *Data Packet Inspection*- Techniken umfassend.

3. Verfahren nach einem der vorhergehenden Ansprüche, wobei:

   - Werte von KQIs in einer Skala umfasst sind, in der der niedrigste Wert der Skala die schlechteste Erfahrungsqualität anzeigt, und der höchste Wert der Skala die höchste Erfahrungsqualität anzeigt, wobei die höchste Erfahrungsqualität erreicht wird, wenn die Anzahl der Unterbrechungen während der Wiedergabe eines Videos Null ist, und die schlechteste Erfahrungsqualität erreicht wird, wenn die Anzahl der Unterbrechungen gleich oder größer als ein Schwellenwert ist; und
   - die Variation zwischen den Extremen der Skala linear, konkav oder konvex ist.

4. Verfahren nach Anspruch 3, die Durchführung der Zuordnung eines KQI zu einem KPI mittels einer konkaven Funktion umfassend, gemäß der folgenden Formel:

$$KQI = \begin{cases} 1 + (4 - KPI)^4, & if\ KPI \leq 4 \\ 1, & if\ KPI > 4 \end{cases}$$

wobei der niedrigste Wert der Skala 1 ist, der höchste Wert der Skala 5 ist, und der Schwellenwert 4 ist.

5. Verfahren nach einem der vorhergehenden Ansprüche, die Bestimmung einer globalen KQI Funktion der Reihe der KQIs umfassend, jeder KQI der Reihe der KQIs jedem Video, das für die Benutzeranwendung bereitgestellt ist, entsprechend, durch Berechnung:

- des Durchschnitts des Satzes der KQIs;
- des Medians der Verteilungsfunktion des Satzes der KQIs; oder
- eines Perzentils der kumulativen Verteilungsfunktion des Satzes der KQIs.

6. Verfahren nach Anspruch 5, das Verwerfen der KQIs für die globale KQI Berechnung umfassend, wenn die Wiedergabezeit des Videos in Bezug zu den KQIs unter einem bestimmten Schwellenwert liegt.

7. Verfahren nach einem der vorhergehenden Ansprüche, wobei der globale KQI das Maß für die Erfahrungsqualität eines Video-Service ist.

**Revendications**

1. Procédé pour mesurer la qualité d'expérience d'un service vidéo, ledit service vidéo étant une diffusion vidéo en flux continu par contournement fournie à une application d'utilisateur sur demande au moyen d'un réseau, dans lequel le procédé comprend :

   - le calcul d'un Indicateur Clé de Performance, ou KPI, à partir de paramètres réseau mesurables dudit réseau pour chaque vidéo fournie par ledit service vidéo, assignant un Indicateur Clé de Qualité, ou KQI, à chaque KPI au moyen de modèles analytiques et le calcul d'une fonction de KQI globale d'un ensemble de KQIs, dans lequel ledit KPI est un taux d'interruption, ledit taux d'interruption indiquant un nombre d'interruptions ou de pauses pendant un temps de reproduction vidéo ;

   **caractérisé en ce que** qu'il comprend en outre :

   - la considération qu'une première interruption est survenue après le démarrage d'une reproduction d'une vidéo dans ladite application d'utilisateur si la condition suivante est donnée :

   $$B\ (t) < r \cdot (t - T_0)$$

   où

   $B(t)$ est l'évolution en fonction du temps des octets reçus de ladite vidéo dans ladite application d'utilisateur ;
   $t$ est la variable de temps ;
   $r$ est le débit binaire vidéo ;
   $T_0$ est le temps initial de mise en mémoire tampon nécessaire pour acquérir un volume initial d'octets $B_0$, dans lequel $B_0 = r \cdot T_0$, et dans lequel $T_0$ est un temps initial de reproduction spécifique à chaque lecteur vidéo ;

- la considération d'une interruption pendant ladite reproduction de ladite vidéo après *n* interruptions survenues si la condition suivante est donnée :

$$B(t) < r \cdot (t - T_0 - \sum_{i=1} Ti)$$

dans lequel

*n* est le nombre d'interruptions qui sont survenues précédemment pendant la reproduction de ladite vidéo jusqu'au temps *t* ; et $T_i$ est la durée de chaque interruption, ladite durée étant le temps nécessaire pour mettre en mémoire tampon $B_0$ octets ; et

- le calcul dudit taux d'interruption pour ladite vidéo selon la formule suivante :

$$KPI = \frac{N_{int}}{d}$$

où

KPI est l'Indicateur Clé de Performance se référant audit taux d'interruption ;
$N_{int}$ est le nombre total d'interruptions qui sont survenues pendant ladite reproduction de ladite vidéo ;
et
*d* est la durée de la reproduction de ladite vidéo, dans laquelle $d = T_{end} - T_{start}$,
$T_{end}$ étant l'instant de réception du paquet de données de la dernière vidéo et
$T_{start}$ étant l'instant de la demande vidéo.

2. Procédé selon la revendication 1, comprenant l'obtention dudit débit binaire vidéo au moyen de techniques d'Inspection de Paquet de Données.

3. Procédé selon l'une quelconque des revendications précédentes, dans lequel :

- des valeurs de KQIs sont comprises dans une échelle par laquelle la plus petite valeur de ladite échelle indique la pire qualité d'expérience et la plus haute valeur de ladite échelle indique la plus haute qualité d'expérience, ladite plus haute qualité d'expérience est atteinte si le nombre d'interruptions pendant la reproduction d'une vidéo est zéro et ladite pire qualité d'expérience est atteinte si ledit nombre d'interruptions est égal ou supérieur à un seuil ; et
- la variation entre les extrémités de ladite échelle est linéaire, concave ou convexe.

4. Procédé selon la revendication 3, comprenant la réalisation de ladite assignation d'un KQI à un KPI au moyen d'une fonction concave selon la formule suivante :

$$KQI = \begin{cases} 1 + (4 - KPI)^4, & si\ KPI \leq 4 \\ 1, & si\ KPI > 4 \end{cases}$$

dans laquelle ladite valeur plus petite de ladite échelle est 1, ladite valeur plus haute de ladite échelle est 5 et ledit seuil est 4.

5. Procédé selon l'une quelconque des revendications précédentes, comprenant la détermination d'une fonction de KQI globale dudit ensemble de KQIs, chaque KQI dudit ensemble de KQIs correspondant à chaque vidéo fournie à ladite application d'utilisateur, en calculant :

- la moyenne dudit ensemble de KQIs ;
- la médiane de la fonction de répartition dudit ensemble de KQIs ; ou
- un centile de la fonction de répartition cumulative dudit ensemble de KQIs.

6. Procédé selon la revendication 5, comprenant le rejet de KQIs pour ledit calcul de KQI global si le temps de reproduction de vidéos en rapport avec lesdits KQIs est en dessous d'un certain seuil.

7. Procédé selon l'une quelconque des revendications précédentes, dans lequel ledit KQI global est la mesure de ladite qualité d'expérience d'un service vidéo.

# Information flow

**FIG. 1**

Measurable network parameters (Sources: DPIs, RADIUS) → KPIs Model $KPI = f(\text{network data})$ → KPIs → KQIs Model $KQI = f(KPI_1, KPI_2 \ldots)$ → KQIs

EP 2 761 879 B1

**FIG. 2**

**FIG. 3**

**FIG. 4**

13

**FIG. 5**

**FIG. 6**

EP 2 761 879 B1

**FIG. 7**